# EUROPEAN PATENT APPLICATION

(11) **EP 1 952 898 A1**
(43) Date of publication of application: **06.08.2008**
(21) Application number: 08101057.1
(22) Date of filing: 29.01.2008
(51) Int. Cl.: B07C 5/34, G06K 7/10, G01N 21/90

(54) **Container inspection machine**

(30) Priority: 02.02.2007 US 701597
(71) Applicant: Emhart Glass S.A., 6330 Cham (CH)
(72) Inventor: White, Timothy P., New Boston, NY 03070 (US); Houck, R. Dean, Addison, NY 14801 (US)
(74) Representative: Warren, Anthony Robert

(57) **Abstract**

A machine is disclosed for inspecting the mold code (14) on the heel of a glass bottle (10) having a vertical axis (26). A light source (30) is located below the bottle for directing a light beam (35) vertically, coaxially upwardly towards the bottle. An inner conical reflector (18) having an outer conical reflecting surface (20) located between the bottle and the light source and coaxial with the axis of the bottle receives the light beam from the light source and reflects it as a first conical light beam (36). An outer ring reflector (22), having an inner conical reflecting surface (24), receives the first conical light beam (36) and reflects it as a second conical light beam (38) directed at the mold code (14) on the heel of the bottle. The second conical light beam reflects from the mold code and retraces the second conical light path. A CCD camera (40) is provided, and a beam splitter (32) located between the inner conical reflector and the light source redirects a portion of the light reflected from the inner conical reflecting surface towards the CCD camera to image the mold code. A processor (42) analyzes the image acquired by the CCD camera.

## Description

The present invention relates to machines, which inspect mold numbers defined on the heel of a glass container.

Glass containers or bottles are formed in an I. S. Machine which is a machine made up of a number of identical sections. Each section may produce a number of bottles. Should a formed bottle later fail an inspection, it is helpful to know the mold in which it was formed and accordingly bottles are usually formed with a mold code. One such code is defined by convex dots of glass formed when the bottle is formed in a blow mold. These dots extend about a horizontal plane at the heel portion of the bottle. U.S. Patents numbered 6,049,389 and 6,795176 illustrate a heel code mold number reader. An alternate code can be formed of dots formed on the bottom of the bottle (Japanese publication 61-278740).

It is an object of the present invention to provide an improved mold number reader.

According to the present invention, there is provided a machine for inspecting the mold code on the heel of a glass container as defined in claim 1.

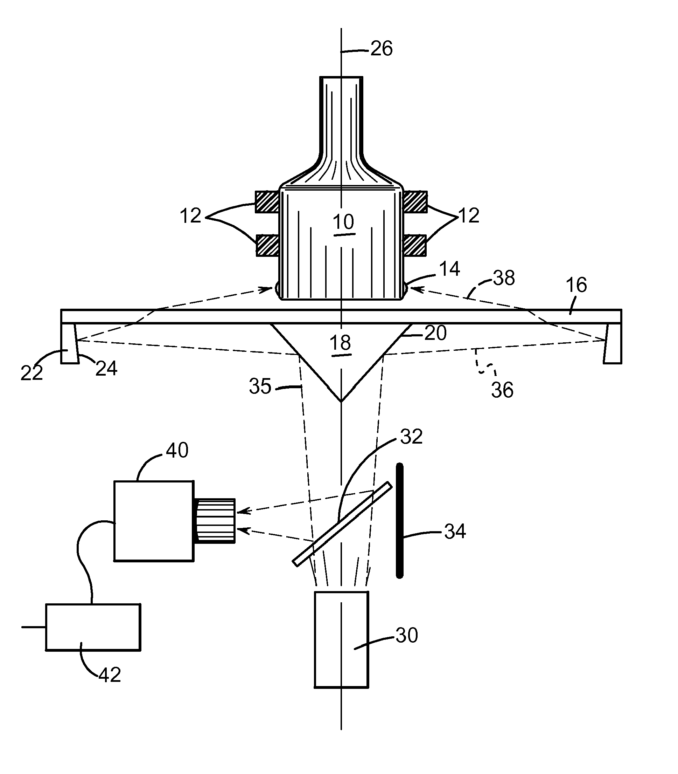

Reference will now be made to the accompanying drawings in which the single figure is a schematic drawing of a presently preferred embodiment incorporating the principles of the invention.

A bottle 10 to be inspected is supported in a vertical orientation by opposed pairs of belt conveyors 12 at an inspection station. A mold code in the form of convex dots 14 is formed on an annular portion of the heel of the bottle. The bottle is located above a protective window 16 that supports an inner conical reflector 18 with an outer reflecting surface 20 and an outer ring reflector 22 with an inner conical reflecting surface 24. The inner conical reflector and the outer ring reflector are coaxial with the axis 26 of the bottle. A light source 30 directs light coaxially towards the bottle. A coaxial beam splitter 32, located between the light source and the inner conical reflector, intercepts the light beam from the source. A part of the beam will be reflected by the reflector, and since this is unwanted stray light, it is directed towards a light block or trap 34. The remainder of the light beam reaches the inner conical reflector. A first cone of illumination light 35 is reflected by the inner conical reflector as a second conical illumination beam 36 towards the outer ring reflector. The second conical illumination beam 36 reflects from the outer ring reflector as a third conical illumination beam 38 which is directed towards the annular area of the bottle heel where the dot code is located. This third conical beam of light reflects off the dots retracing its exact path back as the third conical beam, the second conical beam and the first conical beam towards the light source. The beam splitter 32 redirects a portion of the retraced conical beam towards a CCD or similar camera 40 which is capable of imaging the light reflected off of the dot code bumps. An image processor 42 defines the imaged mold code.

## Claims

1. A machine for inspecting the mold code on the heel of a glass container when disposed with its axis vertical at an inspection location, comprising
a light source below the inspection location for directing a light beam vertically, coaxially upwardly towards said location,
in inner conical reflector having an outer conical reflecting surface located between said location and said light source and coaxial with the axis of a container when disposed at said location, for receiving the light beam from said light source and reflecting a first conical light beam,
an outer ring reflector, having an inner conical reflecting surface, for receiving said first conical light beam and reflecting said first conical light beam as a second conical light beam directed at the mold code on the heel of a container when disposed at said location,
whereby said second conical light beam will reflect from the mold code and retrace said second conical light path,
a CCD camera for acquiring an image,
a beam splitter located between said inner conical reflector and said light source for redirecting a portion of the light reflected from said inner conical reflecting surface towards said CCD camera, and
a processor for analyzing the image acquired by said CCD camera.

2. A machine for inspecting the mold code on the heel of a glass container according to claim 1, wherein the light beam received from the light source and reflected as the first conical light beam is a conical light beam.

3. A machine for inspecting the mold code on the heel of a glass container according to claim 2, further comprising a light blocker for trapping that portion of the light beam from the light source which is redirected by said beam splitter.
